# EUROPÄISCHE PATENTSCHRIFT

(11) **EP 0 782 356 B1**
(45) Veröffentlichungstag und Bekanntmachung des Hinweises auf die Patenterteilung: **21.08.2002**
(21) Anmeldenummer: 96119484.2
(22) Anmeldetag: 04.12.1996
(51) Int. Cl.: H04Q 7/22

(54) **Verfahren zum bestätigten Gruppenruf in einem regional gegliederten GSM-Mobilfunknetz**
Method for acknowledged group call for GSM mobile radio network in regional configuration
Procédé d'appel de groupe confirmé pour configuration régionale d'un réseau radio-mobile GSM

(30) Priorität: 28.12.1995 DE 19549008
(43) Veröffentlichungstag der Anmeldung: 02.07.1997
(73) Patentinhaber: SIEMENS AKTIENGESELLSCHAFT, 80333 München (DE)
(72) Erfinder: Thoma, Sebastian, Dr., 82024 München (DE)

(56) Entgegenhaltungen:
- WO-A-92/14329
- WO-A-94/28687
- COLLESI S ET AL: "SMS BASED APPLICATIONS FOR GSM NETWORKS" TECHNICAL REPORTS - CSELT, vol. 23, no. 3, 1 June 1995, pages 337-349, XP000573777

## Beschreibung

Ein GSM-Mobilfunknetz, wie es aus H. Ochsner, "Das zukünftige paneuropäische digitale Mobilfunksystem", Teil 1 bis 3, , Bulletin SEV/VSE (ASE/UCS), 79 (1988), vom 4. Juni, 6. August bzw. 5. November bekannt ist, dient dem Herstellen von Verkehrsbeziehungen zwischen mobilen Kommunikationsteilnehmern.

Diese mobilen Kommunikationsteilnehmer werden durch Mobil-stationen realisiert, die über eine Luftschnittstelle mit Basisstationen des GSM-Mobilfunksystems Informationen austauschen. Die Basisstationen des GSM-Mobilfunknetzes sind dabei ortsfest und leitungsgebunden jeweils mit einer Vermittlungseinrichtung verbunden, welche wiederum mit weiteren Vermittlungseinrichtungen vernetzt ist. In den Vermittlungseinrichtungen sind auch Übergänge zu weiteren Kommunikationsnetzwerken realisiert.

Ein solches weiteres Kommunikationsnetz kann z.B. ein Datenübertragungsnetzwerk sein, wie es aus Jari Hämäläinen et al. "Packet Data Over GSM Network" TDOC SMG 238/93 vom 28.9.1993 bekannt ist. Durch die Kopplung mit einem Datenübertragungsnetzwerk kann ein GSM-Mobilfunknetzwerk dahingehend ausgestaltet werden, daß auch eine mobile Datenübertragung innerhalb dieses Netzwerkes stattfinden kann. Die Übergangsschnittstelle zwischen Datenübertragungsnetzwerk und GSM-Mobilfunknetz realisiert dabei eine Verbindungskontrolleinheit, die beispielsweise in den Vermittlungseinrichtungen des GSM-Mobilfunknetzes installiert ist. Diese Verbindungskontrolleinheit gewährleistet, daß aus dem Datenübertragungsnetzwerk erhaltene Daten in eine GSM-gemäße Protokollform konvertiert und Meldungen innerhalb des GSM-Mobilfunknetzes, die diese Daten enthalten, generiert werden. Weiterhin übernimmt es diese Verbindungskontrolleinheit, an das Datenübertragungsnetzwerk und dortige Adressaten gerichtete Meldungen entgegenzunehmen und in die Protokollform dieses Datenübertragungsnetzwerkes zu konvertieren.

Aus dem GSM-Mobilfunknetz ist ein Rundruf bekannt, der über Kanäle der Luftschnittstelle an alle Mobilstationen innerhalb einer oder mehrerer Regionen des GSM-Mobilfunknetzes abgesetzt werden kann. Dieser Rundruf (Broadcast) betrifft beispielsweise Mitteilungen über die Kennzeichnung des Netzes, die Verfügbarkeit von bestimmten Optionen, die von der jeweiligen Basisstation verwendeten Trägerfrequenzen und weitere Systeminformationen. Alternativ kann der Rundruf auch dadurch gestaltet werden, daß in einem Rufkanal ein Ruf ohne individuelle Adressierung abgegeben wird. Dieser Rundruf macht es im GSM-Mobilfunknetz möglich, sehr schnell kurze allgemein interessierende Informationen in den Funkbereichen der ausgewählten Basisstationen zu verbreiten. Jede einzelne Mobilstation stellt selbständig sicher, daß diese Nachrichten empfangen und ausgewertet werden.

Der Artikel "SMS based applications for GSM networks", S.Colleri et al, Technical Reports-CSELT, vol. 23, no. 3, 01.06.1995, Seiten 337-3 9, zeigt unter anderen diesen Gruppenruf.

Die Internationale Anmeldung WO 94/28687 beschreibt sowell das permanente Anfrechterhalter einer Broadcast-Kanals, als and ein zweistufige Verfahren, bei dem zurächst ein Paging-Signal ausgesendet wird und auschließend ein Broadcast-Kanal an den Basisstationen eingerichtet wird, die Antwort von Mobilstationen auf das Paging-signal erhalten haben.

Eine gezielte Informationsübertragung mit der Gewißheit, daß die übertragene Information auch empfangen wurde, ist hierbei nicht möglich. Die oben genannte Druckschrift "Packet Data Over GSM Network" schlägt deshalb vor, dieselbe Nachricht mehrmals zu übertragen, um den Nachrichtenverlust zu verhindern. Diese Maßnahme kann die Wahrscheinlichkeit des Nachrichtenverlustes reduzieren, jedoch liegt beim Sender dieser Nachrichten kein gesichertes Wissen vor, ob und von wem diese Nachrichten empfangen wurden.

Der Erfindung liegt die Aufgabe zugrunde, diesem Nachteil abzuhelfen. Die Aufgabe wird durch das Verfahren nach den Merkmalen des Patentanspruchs 1 gelöst.

Erfindungsgemäß wird ein bekannter GSM-Mobilfunk-Rundruf genutzt, in welchen durch die Verbindungskontrolleinheit von einem Datenübertragungsnetzwerk in das GSM-Mobilfunknetz zu sendende Daten integriert werden. Die Mobilfunkstationen empfangen den Rundruf und damit die darin enthaltenen Daten. Diejenigen Mobilstationen, die durch die enthaltenen Daten angesprochen werden und damit eine Untergruppe unter allen Mobilfunkstationen bilden, setzen daraufhin eine Bestätigungsmeldung an zumindest eine Verbindungskontrolleinheit ab.

Durch diese Ausgestaltung eines Gruppenrufes, wobei die Gruppen erst durch die in einem Rundruf enthaltenen Daten gebildet werden, ermöglicht es, sehr schnell eine große Anzahl von Mobilstationen zu erreichen, und zweitens mit einer Bestätigung des Empfangs der im Rundruf enthaltenen Daten eine höhere Sicherheit der Datenübertragung zu erreichen, denn nach Auswerten der Bestätigungsmeldungen kann der Gruppenruf durch Aussenden eines wiederholten Rundrufes gezielt wiederholt werden.

Vorteilhafterweise wird das erfindungsgemäße Verfahren dadurch weitergebildet, daß die Mobilstationen nach Empfang des Rundrufs zumindest einen Teil der im Rundruf enthaltenen Daten bewerten oder weiterverarbeiten. Abhängig vom Bewertungsergebnis bzw. Weiterverarbeitungsergebnis wird die Bestätigungsmeldung an eine Verbindungskontrolleinheit oder einen bestimmten Adressaten im Datenübertragungsnetzwerk abgesetzt. Der Informationsgehalt der im Rundruf enthaltenen Daten bildet somit die Grundlage der Selektion einzelner Mobilstationen für eine vorbestimmte oder nicht vorherbestimmte, aber an einem bestimmten Informationsgehalt interessierte Gruppe von Mobilstationen. Die Gruppenbildung kann deshalb vorteilhafterweise anhand einer Adreßinformation in den empfangenen Daten oder den Informationsgehalt der empfangenen Daten erfolgen.

Bei der Wahl des Kanals für den Rundruf kann dabei vorteilhafterweise auf einen einzelnen Rundrufkanal (Cell Broadcast Channel) oder einen Rufkanal (Paging Channel) zurückgegriffen werden. Wird der Rufkanal zum Aussenden des Rundrufes genutzt, kann gleichzeitig eine Vorselektion durch eine Untergruppenbildung innerhalb des Rufkanals geschehen. Damit ist es auch möglich, den Kreis der adressierten Mobilstationen vorab einzuschränken. Diese Einschränkung des Rundrufes kann auch dadurch geschehen, daß der Rundruf nur über bestimmte Basisstationen, die anhand von regionalen Gesichtspunkten ausgewählt wurden, ausgesendet wird.

Das erfindungsgemäße Verfahren wird auch dadurch weitergebildet, daß die Bestätigungsmeldung über einen Kanal mit zufälligem Zugriff abgesetzt wird, wodurch eine sehr schnelle Antwort möglich ist und bei einer wiederholten Aussendung des Rundrufes die benötigte Zeit für den bestätigten Gruppenruf verringert wird. Da eine Bestätigungsmeldung über einen Kanal mit zufälligen Zugriffen nur über eine sehr eingeschränkte Bitrate verfügt, enthält diese Bestätigungsmeldung vorteilhafterweise lediglich Angaben über die Identität der Mobilstation oder die des empfangenen Rundrufes oder auch nur über eine Adresse des Bestätigungsempfängers. Es können auch mehrere dieser Informationen kombiniert werden. Soll eine größere Anzahl von Informationen in diese Bestätigungsmeldung integriert werden, wird die Bestätigungsmeldung wiederholt abgesetzt oder es wird eine Zuweisung eines weiteren Kanals beantragt. Wird dieser weitere Kanal zugewiesen, können dann größere Informationsmengen übertragen werden.

Bei der Aussendung des Rundrufes oder auch der Bestätigungsmeldung ist es u.U. vorteilhaft, die übertragenen Daten zu verschlüsseln. Damit werden diese Meldungen nur für einen eingeschränkten Empfängerkreis auswertbar. Es ist z.B. möglich, durch einen Selektor in der Mobilstation die im Rundruf enthaltenen Daten zu verarbeiten, indem zumindest Teile der Daten mit einer vorgebbaren Maske verglichen werden. Eine ähnlich selektive Verarbeitung von Bestätigungsmeldungen ist auch in der Verbindungskontrolleinheit oder bei einem Adressaten im Datenübertragungsnetzwerk möglich.

Im folgenden soll das erfindungsgemäße Verfahren nun anhand von zeichnerischen Darstellungen näher erläutert werden.
- FIG 1: zeigt ein GSM-Mobilfunknetz mit einer Übergangsschnittstelle zu einem Datenübertragungsnetzwerk,
- FIG 2: zeigt schematisch den Meldungsablauf bei einem bestätigten Gruppenruf über einen Zellenrundrufkanal,

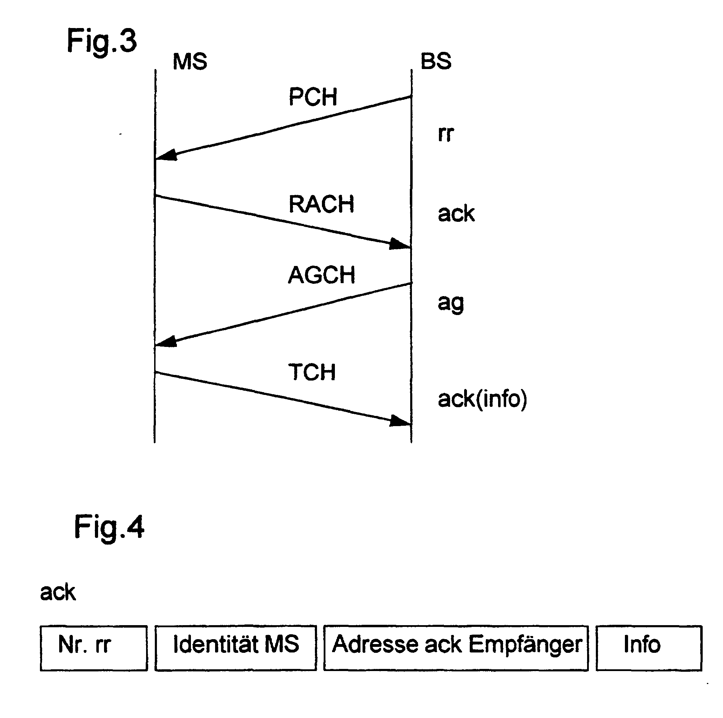

- FIG 3: zeigt schematisch den Meldungsablauf bei einem bestätigten Gruppenruf über einen Rufkanal mit späterer Zuweisung eines Nutzdatenkanals, und
- FIG 4: zeigt den beispielhaften Aufbau einer Bestätigungsmeldung.

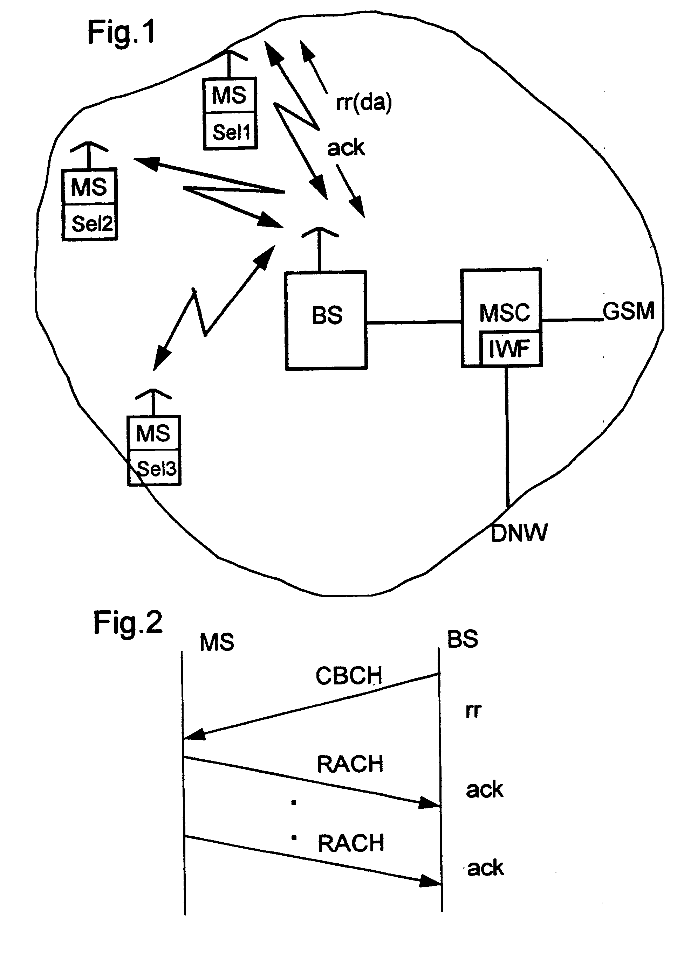

Das GSM-Mobilfunknetz GSM nach FIG 1 besteht aus einer Vermittlungseinrichtung MSC, in die eine Verbindungskontrolleinheit IWF zur Realisierung einer Übergangsschnittstelle zu einem Datenübertragungsnetzwerk DNW integriert ist. Es ist in FIG 1 nur eine Vermittlungseinrichtung MSC dargestellt. Die regionale Gliederung des GSM-Mobilfunknetzes GSM wird dadurch erreicht, daß mehrere Vermittlungseinrichtungen MSC, die miteinander vernetzt sind, existieren und an die Vermittlungseinrichtungen MSC jeweils mehrere Basisstationen BS angeschlossen sind. In FIG 1 ist jedoch beispielhaft nur eine Basisstation BS dargestellt. Die Verbindung zwischen den einzelnen Komponenten des GSM-Mobilfunknetzes GSM erfolgt bis einschließlich der Basisstation BS üblicherweise leitungsgebunden. Weiterhin gehören dem GSM-Mobilfunknetz GSM auch Mobilstationen MS an. Diese Mobilstationen MS sind jedoch mit der Basisstation BS über eine Luftschnittstelle verbunden, wodurch die Mobilität dieser Mobilstationen MS ermöglicht wird. Da die Basisstationen BS in der Regel eine flächendekkende Vermittlung der Mobilstationen MS bewirken sollen, wird die Mobilität der Mobilstationen MS auch über den Funkbereich einer einzelnen Basisstation BS hinaus sichergestellt.

Jede der in FIG 1 dargestellten drei Mobilstationen MS verfügt über einen individuellen Selektor SEL1,2,3. Über eine Basisstation BS wird ein Rundruf rr veranlaßt, der von allen Mobilstationen MS innerhalb des Funkbereiches dieser Basisstation BS empfangbar ist. In diesem Rundruf rr sind Daten da enthalten, die somit auch von den Mobilstationen MS empfangen werden können. Die Mobilstationen MS wenden ihre Selektoren SEL1,2,3 jeweils auf zumindest einen Teil der im Rundruf rr enthaltenen Daten da an, wodurch eine Selektion der Mobilstationen MS erreicht wird und innerhalb der Gesamtzahl der Mobilstationen MS eine Gruppenbildung stattfindet. Bestimmte, durch die im Rundruf rr enthaltene Daten da angesprochene Mobilstationen MS setzen eine Bestätigungsmeldung ack an zumindest eine Verbindungskontrolleinheit IWF ab. Diese Bestätigungsmeldung ack gelangt über die Luftschnittstelle zur Basisstation BS, die diese weiterhin innerhalb des GSM-Mobilfunknetzes GSM an die Verbindungskontrolleinheit IWF bzw. einem Adressaten im Datenübertragungsnetzwerk DNW weiterleitet.

Die Daten da im Rundruf rr können dabei auf verschiedenartigste Weise strukturiert sein. Sie können sowohl Adreßinformationen enthalten, wodurch die Selektoren SEL1,2,3 der verschiedenen Mobilstationen MS die Adreßinformationen mit ihrer eigenen Adresse vergleichen können, d.h. die Gruppenbildung durch die Wahl der Adreßinformationen vor dem Aussenden der Rundrufs rr vorgenommen wird. Eine derartige Anwendung kann z.B. die Informationsübertragung an verschiedene Fahrzeuge eines Transportunternehmens sein, wobei die Fahrzeuge jeweils mit einer Mobilstation MS ausgestattet sind und eine gemeinsame Gruppenadresse haben. Eine weitere Anwendung ist z.B. die der Point of Sales, also mobiler oder auch stationärer Einrichtungen, wie z.B. Kassenautomaten, die damit über das GSM-Mobilfunknetz GSM Daten mit Datenzentralen austauschen können. Auch hier können über eine Gruppenadreßinformation nur gewisse Point of Sales ausgewählt werden.

Die Gruppenbildung kann jedoch auch anhand des Informationsgehaltes der empfangenen Daten da erfolgen. Dies bedeutet, daß alle empfangsbereiten Mobilstationen MS innerhalb des Funkbereiches der den Rundruf rr aussendenden Basisstation BS die Daten da empfangen und ein Informationsselektor SEL1,2,3 innerhalb der Mobilstation MS die Daten da weiterverarbeitet. Anhand einer Maske können nun bestimmte Informationen, wie z.B. regionale Wetterinformationen, Staumeldungen oder ähnliches, ausgewählt werden. Die Selektoren SEL1,2,3 der Mobilstationen MS können so individuell zum Filtern der empfangenen Daten da innerhalb der Rundrufe rr gestaltet sein.

FIG 2 zeigt den Meldungsablauf zwischen Mobilstation MS und Basisstation BS für den Rundruf rr und die Bestätigungsmeldung ack. Hierbei erfolgt über einen Zellenrundrufkanal CBCH (Cell Broadcast Channel) der Luftschnittstelle durch die Basisstation BS das Aussenden eines Rundrufes rr. Die empfangsbereiten Mobilstationen MS empfangen damit den Rundruf rr und die darin enthaltenen Daten da. Jede einzelne Mobilstation MS, die durch die Daten da angesprochen wurde, setzt eine Bestätigungsmeldung ack auf einen Kanal mit zufälligem Zugriff RACH (Random Access Channel) an die Basisstation BS ab. Diese Bestätigungsmeldung ack kann wiederholt werden. Die Wiederholung dient zum einen der größeren Sicherheit der Übertragung dieser Bestätigungsmeldung ack, da auf einem Kanal mit zufälligem Zugriff RACH die Bestätigungsmeldungen ack verschiedener Mobilstationen MS kollidieren können. Die Wiederholung einer Bestätigungsmeldung ack mit unterschiedlichen Daten da kann jedoch auch dazu dienen, eine größere Informationsmenge in diese Bestätigungsmeldung ack einzubetten.

Das Problem der stark eingeschränkten Bitrate über einen Kanal mit zufälligem Zugriff RACH kann auch auf die in PIG 3 dargestellte Weise gelöst werden. Der Rundruf rr von Basisstation BS zu den Mobilstationen MS geschieht hier beispielsweise über einen Rufkanal PCH. Ein Rufkanal (Paging Channel) PCH kann weiter untergliedert werden, wodurch eine Vorselektion von Mobilstationen MS anhand dieser admininistrativen Untergruppenbildung vorgenommen wird. Es ist jedoch auch möglich, über den Rufkanal PCH alle Mobilstationen MS im Funkbereich der jeweiligen Basisstation BS zu erreichen (keine Untergruppenbildung im Rufkanal PCH).

Jede einzelne angesprochene Mobilstation MS setzt wiederum eine Bestätigungsmeldung ack auf den Kanal mit zufälligem Zugriff RACH ab. In dieser Bestätigungsmeldung ack kann jedoch eine Anforderung eines individuellen Kanals zur weiteren Informationsübertragung angefordert werden. In diesem Falle sendet die Basisstation BS eine Kanalzuweisungsmeldung ag auf einem Kanalzuweisungskanal AGCH (Access Grant Channel) an die individuelle Mobilstation MS. Somit ist z.B. ein Nutzkanal TCH für die Luftschnittstelle zwischen dieser Mobilstation MS und der Basisstation BS bestimmt, über den infolge ein Informationsaustausch über die Luftschnittstelle stattfinden kann. Somit sind in der Bestätigungsmeldung ack weitere Informationen info einbettbar.

Je nach durch den Gruppenruf in Anspruch genommenen Dienst sind die Bestätigungsmeldung ack und die darin enthaltenen Daten da strukturiert. Es müssen dabei zumindest Informationen über die Nummer des Rundrufes Nr.rr oder die Identität der Mobilstation MS oder die Adresse des Empfängers der Bestätigungsmeldung ack bzw. weitere Informationen Info enthalten sein. Diese Angaben können dabei innerhalb einer Bestätigungsmeldung ack auch auf mehrere Einzelmeldungen zwischen Mobilstation MS und Basisstation BS verteilt sein, sie werden daraufhin durch die Basisstation BS entweder einzeln oder zusammengesetzt über das GSM-Mobilfunknetz GSM an die Verbindungskontrolleinheit IWF und eventuell einen im Datenübertragungsnetzwerk DNW integrierten Empfänger der Bestätigungsmeldung ack übermittelt.

Dadurch wird es möglich, verschiedene Bestätigungsmodelle aufzubauen, nach denen z.B. nur die Anzahl der den Rundruf rr empfangenen Mobilstationen MS zu zählen ist, nur die Identität der den Rundruf rr empfangenden Mobilstationen MS zu bestimmen ist oder auch gezielte Rückinformationen an den vorgegebenen oder im Rundruf rr bezeichnenden Empfänger der Bestätigungsmeldung ack zu übertragen sind.

Ebenso kann vorgesehen sein, daß der Empfang der Bestätigungsmeldung ack von Basisstation BS gegenüber der jeweiligen Mobilstation MS wiederum bestätigt wird.

## Patentansprüche

1. Verfahren zum bestätigten Gruppenruf in einem regional gegliederten GSM-Mobilfunknetz (GSM) mit Mobilstationen (MS), Basisstationen (BS), Vermittlungseinrichtungen (MSC) und zumindest einer durch eine Verbindungskontrolleinheit (IWF) realisierten Übergangsschnittstelle in ein Datenübertragungsnetzwerk (DNW),
bei dem
- durch eine der Verbindungskontrolleinheiten (IWF) in einem oder mehreren Regionen des GSM-Mobilfunknetzes (GSM) ein Rundruf (rr) mit aus dem Datenübertragungsnetzwerk (DNW) erhaltenen Daten (da) veranlaßt wird,
- wobei durch zumindest einen Teil der im Rundruf (rr) enthaltenden Daten (da) eine Gruppe von Mobilstationen (MS) angesprochen wird, und
- von den angesprochenen Mobilstationen (MS) an die zumindest eine Verbindungskontrolleinheit (IWF) jeweils eine Bestätigungsmeldung (ack) übermittelt wird.

2. Verfahren nach Anspruch 1,
bei dem
- von den Mobilstationen (MS), von denen der Rundruf (rr) empfangen wird,
- zumindest ein Teil der im Rundruf (rr) enthaltenen Daten (da) bewertet oder weiterverarbeitet wird und
- das Absetzen der Bestätigungsmeldung (ack) abhängig von Bewertungsergebnis bzw. Weiterverarbeitungsergebnis geschieht.

3. Verfahren nach Anspruch 1 oder 2,
bei dem die Gruppenbildung entsprechen einer Adreßinformation in den empfangenen Daten (da) oder dem Informationsgehalt der empfangenen Daten (da) erfolgt.

4. Verfahren nach einem der vorhergehenden Ansprüche, bei dem der Rundruf (rr) über einen Zellenrundrufkanal (CBCH) zumindest einer Basisstation (BS) zu den Mobilstationen (MS) veranlaßt wird.

5. Verfahren nach einem der Ansprüche 1 bis 3,
bei dem der Rundruf (rr) über einen Rufkanal (PCH) zumindest einer Basisstation (BS) zu den Mobilstationen (MS) veranlaßt wird.

6. Verfahren nach Anspruch 5,
bei dem eine Untergruppenbildung der Mobilstationen (MS) für den Rufkanal (PCH) vorgenommen wird.

7. Verfahren nach einem der vorhergehenden Ansprüche,
bei dem die Bestätigungsmeldung (ack) über einen Kanal mit zufälligen Zugriff (RACH) abgesetzt wird.

8. Verfahren nach einem der vorhergehenden Ansprüche,
bei dem der Bestätigungsmeldung (ack) Angaben über die Identität der Mobilstation (MS) entnommen werden können.

9. Verfahren nach Anspruch 7 oder 8,
bei dem die Bestätigungsmeldung (ack) Angaben über den empfangen Rundruf und/oder die Adresse des Bestätigungsempfängers enthält.

10. Verfahren nach einem der Ansprüche 7 bis 9,
bei dem im Rahmen der Bestätigungsmeldung (ack) über einen Kanal mit zufälligen Zugriff (RACH) ein Zuweisung eines weiteren Kanals beantragt bzw. eine Ankündigung weiterer über den Kanal mit zufälligen Zugriff (RACH) gesendeter Datenpakete vorgenommen wird.

11. Verfahren nach einem der vorhergehenden Ansprüche,
bei dem eine Verschlüsselung der Informationen des Rundrufs (rr) und/oder der Bestätigungsmeldung (ack) in der zumindest einen Verbindungskontrolleinheit (IWF) oder einem Adressaten im Datenübertragungsnetzwerk (DNW) bzw. der jeweiligen empfangenden Mobilstation (MS) vorgenommen wird.

12. Verfahren nach einem der vorhergehenden Ansprüche,
bei dem ein Selektor (SEL1,2,3) in den Mobilstationen (MS) die im Rundruf (rr) enthaltenen Daten (da) verarbeitet und zumindest Teile davon mit einer vorgebbaren Maske vergleicht.

## Claims

1. Method for confirmed group calls in a regionally subdivided GSM mobile radio network (GSM) with mobile stations (MS), base stations (BS), switching centres (MSC) and at least one gateway interface, which is in the form of an interworking unit (IWF), into a data transmission network (DNW),
in which
- a broadcast call (rr) with data (da) obtained from the data transmission network (DNW) is initiated by means of one of the interworking units (IWF) in one or more regions of the GSM mobile radio network (GSM),
- with one group of mobile stations (MS) being addressed by at least some of the data (da) contained in the broadcast call (rr), and
- an acknowledgement message (ack) being transmitted by each of the addressed mobile stations (MS) to the at least one interworking unit (IWF).

2. Method according to Claim 1,
in which
- the mobile stations (MS) which receive the broadcast call (rr)
- assess or further-process at least some of the data (da) contained in the broadcast call (rr), and
- the acknowledgement message (ack) is sent as a function of the assessment result or of the further-processing result.

3. Method according to Claim 1 or 2,
in which the group formation is carried out corresponding to address information in the received data (da) or the information content of the received data (da).

4. Method according to one of the preceding claims,
in which the broadcast call (rr) is initiated via a cell broadcast call channel (CBCH) from at least one base station (BS) to the mobile stations (MS).

5. Method according to one of Claims 1 to 3,
in which the broadcast call (rr) is initiated via a call channel (PCH) from at least one base station (BS) to the mobile stations (MS).

6. Method according to Claim 5,
in which the mobile stations (MS) are formed into subgroups for the call channel (PCH).

7. Method according to one of the preceding claims,
in which the acknowledgement message (ack) is sent via a random access channel (RACH).

8. Method according to one of the preceding claims,
in which details about the identity of the mobile station (MS) can be taken from the acknowledgement message (ack).

9. Method according to Claim 7 or 8,
in which the acknowledgement message (ack) contains details about the received broadcast call and/or about the address of the acknowledgement receiver.

10. Method according to one of Claims 7 to 9,
in which, in the course of the acknowledgement message (ack), a random access channel (RACH) is used to request assignment of a further channel and/or notify further data packets sent via the random access channel (RACH).

11. Method according to one of the preceding claims,
in which encryption of the information in the broadcast call (rr) and/or in the acknowledgement message (ack) is carried out in the at least one interworking unit (IWF) or an addressee in the data transmission network (DNW) and/or the respective receiving mobile station (MS).

12. Method according to one of the preceding claims,
in which a selector (SEL1, 2, 3) in the mobile stations (MS) processes the data (da) contained in the broadcast call (rr), and compares at least parts of it with a mask which can be predetermined.

## Revendications

1. Procédé d'appel de groupe confirmé dans un réseau de radio mobile GSM (GSM) à structure régionale, comportant des postes mobiles (MS), des stations de base (BS), des dispositifs de commutation (MSC) et au moins une interface, réalisée grâce à une unité de contrôle des liaisons (IWF), pour le transfert vers un réseau de transmission de données (DNW),
dans lequel
- grâce à une des unités de contrôle des liaisons (IWF), on déclenche, dans une ou plusieurs régions du réseau de radio mobile GSM (GSM), un appel en diffusion (rr) contenant des données (da) reçues du réseau de transmission de données (DNW),
- un groupe de postes mobiles (MS) étant sollicité par au moins une partie des données (da) contenues dans l'appel en diffusion (rr) et
- un message de confirmation (ack) est, dans chaque cas, transmis par les postes mobiles (MS) sollicités à la au moins une unité de contrôle des liaisons (IWF).

2. Procédé selon la revendication 1
dans lequel
- les postes mobiles (MS), qui reçoivent l'appel en diffusion (rr),
- analysent ou exécutent un post-traitement d'au moins une partie des données (da) contenues dans l'appel en diffusion (rr) et
- l'envoi du message de confirmation (ack) est effectué en fonction du résultat de l'analyse ou, respectivement, du résultat du post-traitement.

3. Procédé selon la revendication 1 ou 2
dans lequel la formation du groupe a lieu en fonction d'une information d'adressage contenues dans les données reçues (da) ou du contenu d'information des données reçues (da).

4. Procédé selon l'une des revendications précédentes
dans lequel l'appel en diffusion (rr) vers les postes mobiles (MS) est lancé sur un canal de diffusion pour la cellule (CBCH) d'au moins une station de base (BS).

5. Procédé selon l'une des revendications 1 à 3
dans lequel l'appel en diffusion (rr) vers les postes mobiles (MS) est lancé sur un canal d'appel (PCH) d'au moins une station de base (BS).

6. Procédé selon la revendication 5
dans lequel on procède à la formation d'un sous-groupe des postes mobiles (MS) pour le canal d'appel (PCH).

7. Procédé selon l'une des revendications précédentes
dans lequel le message de confirmation (ack) est envoyé sur un canal à accès aléatoire (RACH).

8. Procédé selon l'une des revendications précédentes
dans lequel des indications concernant l'identité des postes mobiles (MS) peuvent être retirées du message de confirmation (ack).

9. Procédé selon l'une des revendications 7 ou 8
dans lequel le message de confirmation (ack) renferme des indications concernant l'appel en diffusion reçu et/ou l'adresse du destinataire de la confirmation.

10. Procédé selon l'une des revendications 7 à 9
dans lequel, dans le cadre du message de confirmation (ack) envoyé sur un canal à accès aléatoire (RACH), on demande l'allocation d'un autre canal ou, respectivement, on annonce d'autres paquets de données envoyés sur le canal à accès aléatoire (RACH).

11. Procédé selon l'une des revendications précédentes
dans lequel on procède à un cryptage des informations de l'appel en diffusion (rr) et/ou du message de confirmation (ack) dans la au moins une unité de contrôle des liaisons (IWF) ou dans au moins un destinataire dans le réseau de transmission de données (DNW) ou, respectivement, dans le poste mobile récepteur respectif.

12. Procédé selon l'une des revendications précédentes
dans lequel un sélecteur (SEL1, 2, 3) dans les postes mobiles (MS) traite les données (da) contenues dans l'appel en diffusion (rr) et compare au moins des parties de celles-ci avec un masque qui peut être défini au préalable.
